(19)

Europäisches
Patentamt
European
Patent Office
Office européen
des brevets

(11) **EP 3 694 223 A1**

(12) **EUROPEAN PATENT APPLICATION**

(43) Date of publication:
**12.08.2020 Bulletin 2020/33**

(51) Int Cl.:
**H04R 3/00** *(2006.01)*      **H04R 19/04** *(2006.01)*
**H04R 29/00** *(2006.01)*

(21) Application number: **19155823.8**

(22) Date of filing: **06.02.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Knowles Electronics, LLC
Itasca, Illinois 60143 (US)**

(72) Inventors:
• **Perktold, Lukas
  8340 Hinwil (CH)**
• **Mueller, Simon
  8903 Birmensdorf (CH)**

(74) Representative: **Grünecker Patent- und
Rechtsanwälte
PartG mbB
Leopoldstraße 4
80802 München (DE)**

(54) **SENSOR ARRANGEMENT AND METHOD FOR PROVIDING A SENSOR SIGNAL**

(57)      A sensor arrangement comprises a first capacitive sensor (11) with a first and a second terminal (12, 13), a second capacitive sensor (21) with a first and a second terminal (22, 23), a charge pump arrangement (30) coupled to the first terminal (12) of the first capacitive sensor (11) and to the first terminal (22) of the second capacitive sensor (21), and a differential output (40). The differential output (40) comprises a first terminal (41) coupled to the second terminal (13) of the first capacitive sensor (11) and a second terminal (42) coupled to the second terminal (23) of the second capacitive sensor (21). The first and the second capacitive sensor (11, 21) have an opposite geometric orientation.

FIG 1A

**Description**

The present disclosure is related to a sensor arrangement, to an apparatus comprising a sensor arrangement and a method for providing a sensor signal.

A sensor arrangement may comprise a capacitive sensor which detects a parameter. The parameter to be detected by the capacitive sensor changes a capacitance value of the capacitive sensor. The parameter to be detected may be, for example, sound, noise, vibration and/or acceleration. The capacitive sensor may be realized as a microphone, for example as a micro-electro-mechanical-system microphone, abbreviated to MEMS microphone, or as an electret microphone.

In a MEMS microphone arrangement, the MEMS microphone is used as the capacitive sensor where its capacitive profile is changed by moving its membrane with respect to its backplate. The membrane may be named diaphragm. The membrane and the backplate form the two plates of the capacitive sensor. If the charge Q at the plates remain constant, the change in voltage $\Delta V$ across the membrane and the backplate is proportional to the change $\Delta d$ of a distance d between the plates given by:

$$\Delta V = \frac{Q\,\Delta d}{\varepsilon_o \varepsilon_r A} \ ,$$

wherein A is an area of the plates, $\varepsilon_0$ is the absolute dielectric constant and $\varepsilon_r$ is the relative dielectric constant of the medium between the plates which typically is air. The sensor arrangement which may be implemented as MEMS microphone arrangement comprises the microphone. The signal-to-noise ratio, shorted SNR, of the sensor arrangement is thereby defined by the signal-to-noise ratio for a 94dB sound pressure level signal, shorted SPL signal, as expressed by:

$$\mathrm{SNR}_{mic} = \frac{v_{\mathrm{in\_94dBSPL}}}{\sqrt{v_{\mathrm{n\_mems}}^2 + v_{\mathrm{n\_asic}}^2}} \ ,$$

wherein Vin_94dBSPL represents a root-mean-square voltage level (shorted rms voltage level) at an output of an amplifier, when a sound pressure of 94dBSPL = 1 Pascal is applied to the sensor arrangement; Vn_mems represents the (usually) A-weighted integrated voltage noise of the MEMS microphone at the output of the amplifier across the band of interest (usually 20Hz to 20kHz); and Vn_asic represents the (usually) A-weighted integrated voltage noise of an application specific integrated circuit (shorted ASIC) at the output of the amplifier across the band of interest (usually 20Hz to 20kHz). vn_mems and vn_asic are meant to be summed in an rms sense. That is, the SNR of the sensor arrangement is increased when the signal swing at the input of the amplifier is maximized to reduce the impact of noise contribution of the ASIC. This can be e.g. achieved by a larger sensitivity of the MEMS microphone or alternatively by a reduced parasitic capacitance of the amplifier of the ASIC to reduce signal attenuation as much as possible. Thus, a voltage across the capacitive sensor should be detected with high sensitivity.

It is an object to provide a sensor arrangement, an apparatus with a sensor arrangement and a method for providing a sensor signal which increase the sensitivity for the detection of a parameter.

These objects are achieved with the subject-matter of the independent claims. Further developments and embodiments are disclosed in the dependent claims.

In an embodiment, a sensor arrangement comprises a first capacitive sensor with a first and a second terminal, a second capacitive sensor with a first and a second terminal, a charge pump arrangement coupled to the first terminal of the first capacitive sensor and to the first terminal of the second capacitive sensor, and a differential output having a first terminal coupled to the second terminal of the first capacitive sensor and having a second terminal coupled to the second terminal of the second capacitive sensor.

Advantageously, by the use of two capacitive sensors, a sensor signal at the differential output can be increased. The charge pump arrangement may be operable to provide a high bias voltage to the first and the second capacitive sensor. The high bias voltage also increases the sensor sensitivity.

In an embodiment, the first and the second capacitive sensor have an opposite geometric orientation.

In an embodiment, the first and the second capacitive sensor provide a first and a second sensor signal. Due to this opposite geometric orientation, the first and the second sensor signal are different. Advantageously, the sensor signal obtains a high value.

In an embodiment, the first and the second capacitive sensor are configured to detect the same parameter.

In an embodiment, a first capacitance value of the first capacitive sensor and a second capacitance value of the second capacitive sensor change in opposite directions. Thus, the first capacitance value of the first capacitive sensor increases, when the second capacitance value of the second capacitive sensor decreases and vice versa. The first and the second sensor signal are a function of the first and the second capacitance value.

In an embodiment, one of the first and the second capacitive sensor is configured to operate in-phase with the parameter to be detected and the other of the first and the second capacitive sensor is configured to operate out-of-phase with the parameter to be detected. The parameter to be detected may be an alternating signal. Thus, the first and the second sensor signal are also alternating signals. The first sensor signal has a phase difference of 180 degree or approximately 180 degree to the second sensor signal. Only one of the first and the second sensor signal is in-phase with the parameter to be detected; the other of the first and the second sensor signal is out-of-phase.

In an embodiment, the sensor arrangement comprises a first circuit block. The first circuit block comprises at least one out of a group comprising a first bias diode, an anti-parallel circuit of diodes, a resistor and a first bias capacitor. The first circuit block is coupled to an output side of the charge pump arrangement and to the first terminal of the first capacitive sensor. Advantageously, the first circuit block realizes a coupling with a high impedance value between the charge pump arrangement and the first capacitive sensor. The first circuit block forms a resistive-capacitive network (RC network), e.g. to filter noise, a clock signal and other disturbing signals. The resistive component of the first circuit block may be realized by the anti-parallel circuit of diodes. The capacitive component of the first circuit block may be realized by the first bias capacitor. The first bias capacitor may be a discrete integrated capacitor.

In an embodiment, the first circuit block is also coupled to the first terminal of the second capacitive sensor. Thus, a bias voltage is generated for the second capacitive sensor in an efficient manner.

The charge pump arrangement, the first circuit block and the amplifier arrangement may be realized e.g. as one integrated circuit. Thus, a size of the sensor arrangement is reduced.

In an alternative embodiment, the sensor arrangement comprises a second circuit block that is coupled to the output side of the charge pump arrangement and to the first terminal of the second capacitive sensor.

The charge pump arrangement, the first circuit block, the amplifier arrangement and the second circuit block may be realized e.g. as one integrated circuit.

In an embodiment, the charge pump arrangement comprises a first pump output coupled to the first terminal of the first capacitive sensor and a second pump output coupled to the first terminal of the second capacitive sensor. Advantageously, the first and the second capacitive sensor can separately be provided with a first and a second bias voltage which optionally may be different. Thus, the influence of different characteristics of the two sensors may be reduced by different bias voltages.

In an alternative embodiment, the charge pump arrangement comprises a first pump output coupled to the first terminal of the first capacitive sensor and to the first terminal of the second capacitive sensor.

In an embodiment, the charge pump arrangement comprises a first charge pump coupled to the first pump output.

In a further development, the charge pump arrangement comprises a second charge pump coupled to the second pump output.

In an embodiment, the charge pump arrangement comprises a first charge pump with a first number of stages. The first pump output is coupled to an output of one of the first number of stages. The second pump output is coupled to an output of another of the first number of stages. Advantageously, the first charge pump is operable to generate a first and a second pump voltage which optionally may be different.

In an embodiment, the sensor arrangement comprises an amplifier arrangement having a first input coupled to the second terminal of the first capacitive sensor and a second input coupled to the second terminal of the second capacitive sensor. The amplifier arrangement comprises a first output coupled to the first terminal of the differential output and a second output coupled to the second terminal of the differential output. Thus, the sensor signal tapped at the differential output is buffered by the amplifier arrangement.

In an embodiment, the amplifier arrangement comprises a first amplifier having an input coupled to the first input of the amplifier arrangement and a second amplifier having an input coupled to the second input of the amplifier arrangement. Since the first and the second amplifier are integrated on one integrated circuit, their characteristics correlate.

In a further development, the amplifier arrangement comprises a current source coupled to the first and the second amplifier, for example by a current mirror. The current source may provide a bias current to the first and the second amplifier. Advantageously, the current source may e.g. control a supply of the first and the second amplifier.

In an embodiment, the amplifier arrangement comprises a differential amplifier having a first and a second input coupled to the first and the second input of the amplifier arrangement. Advantageously, the amplification of the first and the second sensor signal is synchronized.

The first and the second capacitive sensor may both be implemented as mechanical sensors. The first and the second capacitive sensor may be fabricated as micro electro mechanical system sensors, abbreviated to MEMS sensors, or as MEMS capacitors.

In an embodiment, the first and the second capacitive sensor are both implemented as one of a group comprising a microphone and an accelerometer.

In an embodiment, the sensor arrangement is configured as microphone arrangement or accelerometer arrangement.

In an embodiment, the first capacitive sensor is implemented as a first microphone having a first backplate and a first diaphragm. The second capacitive sensor is implemented as a second microphone having a second backplate and a second diaphragm. The first and the second capacitive sensor are fabricated such that the first backplate moves towards the first diaphragm when the second backplate moves away from the second diaphragm. Vice versa, the first backplate moves away from the first diaphragm when the second backplate moves towards the second diaphragm.

In an embodiment, an apparatus comprises the sensor arrangement. The apparatus is realized as one of group comprising a mobile device, a smart speaker, a headset and a studio device.

In an embodiment, a method for providing a sensor signal comprises providing a first pump voltage to a first terminal of a first capacitive sensor, providing a second pump voltage to a first terminal of a second capacitive sensor, providing a first output signal at a first terminal of a differential output, providing a second output signal at a second terminal of the differential output, and providing the sensor signal derived from the first output signal and from the second output signal. The first terminal of the differential output is coupled to a second terminal of the first capacitive sensor. The second terminal of the differential output is coupled to a second terminal of the second capacitive sensor. In an embodiment, the first and the second capacitive sensor have an opposite geometric orientation.

The first and the second pump voltage may be equal or may be different.

The first and the second capacitive sensor may detect the same parameter which may be an acoustic signal. The first and the second capacitive sensor may operate in an out-of-phase manner due to the different geometric construction of the first and the second capacitive sensor. The first and the second capacitive sensor may realize a 180 degrees out of phase operation.

The method for providing a sensor signal may be implemented e.g. by the sensor arrangement and the apparatus according to one of the embodiments defined above.

The sensor arrangement is configured as a dual MEMS differential microphone.

The sensor arrangement realizes the integration of a fully differential microphone consisting of two MEMS capacitive sensors generating two sensor signals, which are out of phase. The sensor signals are being sensed by a single integrated circuit. The integrated circuit is realized as an ASIC. This allows for higher integration level of the microphone and thus enables smaller package size construction. With such a construction also the common noise sources inside the amplifier circuit can be correlated and suppressed by the differential nature of the microphone construction allowing the SNR of the integrated circuit to be increased.

The sensor arrangement allows for higher integration level for microphones using a multiple MEMS construction. By eliminating common noise sources of the amplifier such a construction allows for higher SNR of the ASIC.

The following description of figures of embodiments may further illustrate and explain aspects of the sensor arrangement, the apparatus and the method for providing a sensor signal. Devices and circuit parts with the same structure and/or the same effect appear with equivalent reference symbols. In so far as devices or circuit parts correspond to one another in terms of their function in different figures, the description thereof is not repeated for each of the following figures. In the drawings:

Figures 1A to 1F show examples of a sensor arrangement;

Figures 2A to 2D show examples of details of the sensor arrangement;

Figure 3 shows an example of a charge pump arrangement of the sensor arrangement;

Figure 4 shows an example of a cross-section of a sensor arrangement; and

Figures 5A to 5D show examples of an apparatus with a sensor arrangement.

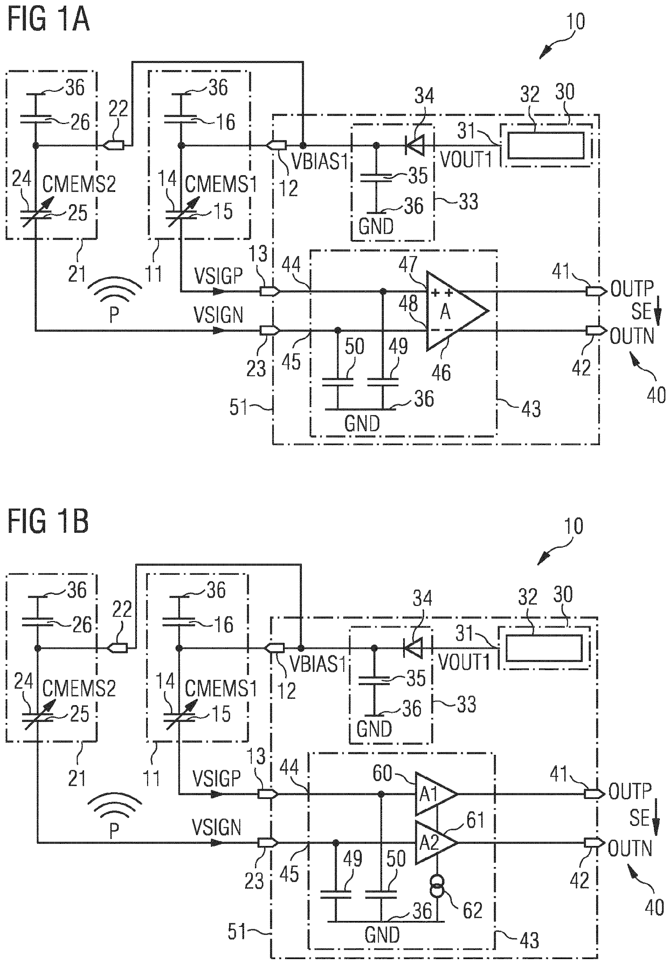

Figure 1A shows an example of a sensor arrangement 10. The sensor arrangement 10 comprises a first capacitive sensor 11 with a first and a second terminal 12, 13. The first capacitive sensor 11 comprises a first electrode 14 that is coupled to the first terminal 12 of the first capacitive sensor 11. The first electrode 14 of the first capacitive sensor 11 may be directly and permanently connected to the first terminal 12 of the first capacitive sensor 11. Moreover, the first capacitive sensor 11 comprises a second electrode 15 coupled to the second terminal 13 of the first capacitive sensor 11. The second electrode 15 may be directly and permanently connected to the second terminal 13 of the first capacitive sensor 11.

Additionally, the sensor arrangement 10 comprises a second capacitive sensor 21 having a first and a second terminal 22, 23. The second capacitive sensor 21 comprises a first and a second electrode 24, 25. The first electrode 24 of the second capacitive sensor 21 is coupled to the first terminal 22 of the second capacitive sensor 21. The first electrode 24 of the second capacitive sensor 21 may be directly and permanently connected to the first terminal 22 of the second capacitive sensor 21. The second electrode 25 of the second capacitive sensor 21 is coupled to the second terminal 23 of the second capacitive sensor 21. The second electrode 25 of the second capacitive sensor 21 may be directly and permanently connected to the second terminal 23 of the second capacitive sensor 21.

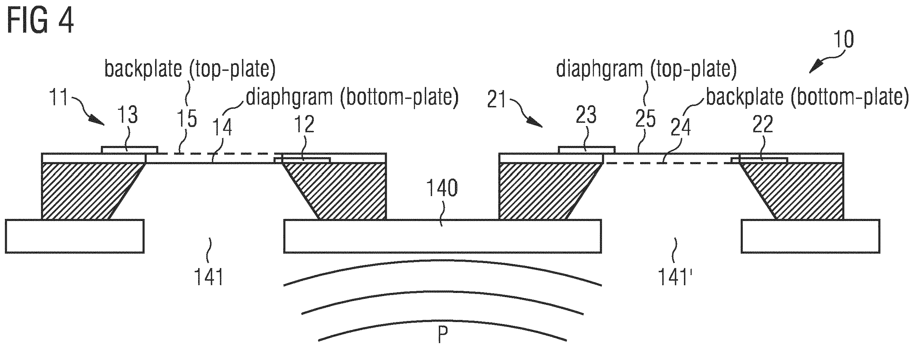

The first and the second capacitive sensor 11, 21 are sensitive for the same parameter. The parameter may be e.g. sound, noise, acceleration and/or vibration. The first and the second capacitive sensor 11, 21 may have the same sensitivity towards the parameter to be measured. The first and the second capacitive sensor 11, 21 have a first and a second capacitance value CMEMS1, CMEMS2. However, the first and the second capacitive sensor 11, 21 have an opposite geometric orientation which is explained below with Figure 4.

The first and the second capacitive sensor 11, 21 may be realized as microphone sensors. Thus, the first electrode 14 of the first capacitive sensor 11 is implemented as a first diaphragm and the second electrode 15 of the first capacitive sensor 11 is implemented as a first backplate. The first electrode 14 of the first capacitive sensor 11 may be a bottom-plate and the second electrode 15 may be a top-plate.

The first electrode 24 of the second capacitive sensor 21 is realized as a second backplate and the second electrode 25 of the second capacitive sensor 21 is implemented as a second diaphragm. The first electrode 24 of the second capacitive sensor 21 may be realized as a bottom-plate and the second electrode 25 may be implemented as a top-plate.

Moreover, the sensor arrangement 10 comprises a charge pump arrangement 30 coupled to the first terminal 12 of the first capacitive sensor 11 and to the first terminal 22 of the second capacitive sensor 21. Thus, the charge pump arrangement 30 comprises a first pump output 31 coupled to the first terminal 12 of the first capacitive sensor 11. Moreover, the first pump output 31 is coupled to the first terminal 22 of the second capacitive sensor 21. The charge pump arrangement 30 comprises a first charge pump 32. The first charge pump 32 is connected on its output side to the first pump output 31.

Additionally, the sensor arrangement 10 comprises a first circuit block 33. The first pump output 31 couples to an input of the first circuit block 33. The first circuit block 33 couples the first pump output 31 to the first terminal 12 of the first capacitive sensor 11. The first circuit block 33 also couples the first pump output 31 to the first terminal 22 of the second capacitive sensor 21. The first circuit block 33 comprises a first bias diode 34. An anode of the first bias diode 34 is connected to the first pump output 31 and a cathode of the first bias diode 34 is connected to the first terminal 12 of the first capacitive sensor 11. Moreover, the first circuit block 33 comprises a first bias capacitor 35 coupling the first bias diode 34 to a reference potential terminal 36. The first bias capacitor 35 couples the first terminal 12 of the first capacitive sensor 11 to the reference potential terminal 36. The first bias capacitor 35 may be realized as a discrete capacitor. For example, the first bias capacitor 35 may be realized as an off-chip capacitor or an on-chip capacitor, for example as a metal-isolator-metal capacitor. Alternatively, the first bias capacitor 35 is not realized as a discrete capacitor, instead the first bias capacitor 35 symbolizes a parasitic capacitance of the connection lines between the charge pump arrangement 30 and the first and the second capacitive sensor 11, 21.

A first sensor capacitor 16 of the sensor arrangement 10 couples the first terminal 12 of the first sensor 11 to the reference potential terminal 36. A second sensor capacitor 26 of the sensor arrangement 10 couples the first terminal 22 of the second capacitive sensor 21 to the reference potential terminal 36. The first and the second sensor capacitor 16, 26 may be realized as discrete capacitors, for example as on-chip capacitors. Alternatively, the first and the second sensor capacitor 16, 26 represent parasitic capacitances of connection lines, for example the connection lines of the first terminal 12 to the first electrode 14, 24 of the first and the second capacitive sensor 11, 21.

Additionally, the sensor arrangement 10 comprises a differential output 40 having a first and a second terminal 41, 42. The first terminal 41 of the differential output 40 is coupled to the second terminal 13 of the first capacitive sensor 11. The second terminal 42 of the differential output 40 is coupled to the second terminal 23 of the second capacitive sensor 21.

Furthermore, the sensor arrangement 10 comprises an amplifier arrangement 43. The differential output 40 forms the output of the amplifier arrangement 43. Thus, the amplifier arrangement 43 has a first input 44 coupled to the second terminal 13 of the first capacitive sensor 11. Moreover, the amplifier arrangement 43 has a second input 45 coupled to the second terminal 23 of the second capacitive sensor 21. A first and a second output of the amplifier arrangement 43 is directly and permanently connected to the first and second terminal 41, 42 of the differential output 40. The amplifier arrangement 43 comprises a differential amplifier 46 having a first and a second input 47, 48 coupled to the first and second input 44, 45 of the amplifier arrangement 43 and thus to the second terminals 13, 23 of the first and the second capacitive sensor 11, 21. A first and a second output of the differential amplifier 46 are coupled to the first and the second terminal 41, 42 of the differential output 40.

The amplifier arrangement 43 comprises a first amplifier capacitor 49 coupling the first input 44 of the amplifier arrangement 43 to the reference potential terminal 36. Moreover, a second amplifier capacitor 50 of the amplifier arrangement 43 couples the second input 45 of the amplifier arrangement 43 to the reference potential terminal 36. The first and the second amplifier capacitor 49, 50 may be realized as discrete capacitors such as, for example, on-chip capacitors. Alternatively, the first and the second amplifier capacitor 49, 50 represent parasitic capacitances resulting from connection lines.

The sensor arrangement 10 comprises an integrated circuit 51. The integrated circuit 51 may be realized as an application specific integrated circuit, abbreviated ASIC. The integrated circuit 51 comprises the charge pump arrangement 30, the first circuit block 33 and the amplifier arrangement 43. The integrated circuit 51 is realized by a single semiconductor body. Additionally, the integrated circuit 51 may also comprise the first and the second capacitive sensor 11, 21. Thus, the first and the second capacitive sensor 11, 21 are additionally realized together with the charge pump arrangement 30 and the amplifier arrangement 43 on the single semiconductor body.

Alternatively, the first and the second capacitive sensor 11, 21 are fabricated using one or two additional semiconductor bodies.

The first charge pump 32 generates a first pump voltage VOUT1. Thus, at the output 31 of the charge pump arrangement 30, the first pump voltage VOUT1 is tapped. On the output side of the first circuit block 33 a first bias voltage VBIAS1 is provided. The first bias voltage VBIAS1 is applied to the first terminal 12, 22 of the first and second capacitive sensor 11, 21. The first bias voltage VBIAS1 is generated by the first circuit block 33. The first bias voltage VBIAS1 is mainly a DC voltage.

The parameter to be detected changes the first and the second capacitance value CMEMS1, CMEMS2 of the first and of the second capacitor 11, 21. Thus, a first sensor signal VSIGP is provided by the first capacitive sensor 11 at the second terminal 13 of the first capacitive sensor 11. Correspondingly, a second sensor signal VSIGN is generated by the second capacitive sensor 21 at the second terminal 23 of the second capacitive sensor 21. Since the first and the second capacitive sensor 11, 21 have an opposite geometric orientation, the first sensor signal VSIGP rises at a point-of-time at which the second sensor signal VSIGN decreases and vice versa. The first and the second sensor signal VSIGP, VSIGN are provided by the first and the second capacitive sensor 11, 21 to the first and the second input 44, 45 of the amplifier arrangement 43. Thus, these two signals VSIGP, VSIGN are provided to the first and the second input 47, 48 of the differential amplifier 46. The first and the second sensor signal VSIGP, VSIGN may have the same amount, but a different sign. The first and the second sensor signal VSIGP, VSIG may also obtain different amount values depending on how well the two signal paths are matched.

A first output signal OUTP is generated at the first terminal 41 of the differential output 40 and a second output signal OUTN is generated at the second terminal 42 of the differential output 40. The amplifier arrangement 43 generates the first and the second output signal OUTP, OUTN as a function of the first and the second sensor signal VSIGP, VSIGN. A sensor signal SE is tapped between the first terminal 41 and the second terminal 42 of the differential output 40. The sensor signal SE is equal to a difference between the first and the second output signal OUTP, OUTN. In the case that the amplifier arrangement 43 has an amplification factor of 1, the sensor signal SE can be calculated according to the following equation:

$$SE = OUTP - OUTN = VSGIP - VSIGN$$

Advantageously, by the use of two capacitive sensors 11, 21 the sensor signal SE is increased in comparison to a sensor arrangement comprising a single capacitive sensor. By the differential construction of the sensor arrangement 10, the influence of disturbances or of parasitic capacitors can be reduced.

A differential configuration is employed to sense the voltage across the two MEMS capacitors 11, 21. The benefit of a differential sensing approach (over a single-ended approach) is that the signal swing at the input side of the amplifier arrangement 43 can be doubled. Under assumption of uncorrelated noise sources of an amplifier input stage the noise of the integrated circuit 51 is increased by:

$$v_{n\_asic} = \sqrt{v_{n1}^2 + v_{n2}^2} \propto \sqrt{2} \ ,$$

whereas Vn1 represents the (usually) A-weighted integrated voltage noise of the positive input 44 of the amplifier arrangement 43 at the output of the amplifier 46 across the band of interest (usually 20Hz to 20kHz); Vn2 represents the (usually) A-weighted integrated voltage noise of the negative input 45 of the amplifier arrangement 43 at the output of the amplifier 46 across the band of interest (usually 20Hz to 20kHz); and vn_asic represents the total (usually) A-weighted integrated voltage noise of the full differential amplifier 46. Thus, the signal amplitude is doubled. Ideally, with a differential sensing method the signal-to-noise ratio (shorted SNR) of the integrated circuit 51 can be increased by 3dB.

Another advantage of a differential sensing method compared to a single ended approach is that disturbing signals injected at the differential input of the amplifier arrangement 43 are suppressed by the common mode rejection of the amplifier arrangement 43. Thereby it is important that the disturbance is coupled into amplifier inputs 44, 45 as symmetrically as possible.

The fully differential amplifier 46 can be used to sense the signal VSIGP, VSIGN of the MEMS capacitors 11, 21 in a differential manner.

The sensor arrangement 10 comprise two separate MEMS capacitors 11, 21. In such a configuration, the first capacitive sensor 11 generates a positive signal whereas the second capacitive sensor 21 generates a negated version of the same acoustic signal P. A dual MEMS configuration allows to increase signal amplitude at the input side of the differential amplifier 46 by factor of two. If the two MEMS capacitors 11, 21 are acoustically isolated the noise of the MEMS capacitors 11, 21 will be only increasing by 3dB resulting in a gain in SNR of (ideally) 3dB.

Both MEMS capacitors 11, 21 have the top-plate connected to the inputs 44, 45 of the amplifier arrangement 43, whereas the bottom plate is connected to the high-voltage charge pump output 31 (acting as a virtual ground). The parasitic capacitance of the first and the second sensor capacitor 16, 26 is not loading the input of the amplifier arrangement 43 and the capacitive loading on the positive and negative input 44, 45 are more symmetric. This allows disturbing signals to be better rejected by the differential nature of the sensor arrangement 10 helping to improve (among other parameters) power supply rejection ratio (shorted PSRR) and electromagnetic compatibility (EMC).

The sensor arrangement 10 is implemented as a differential configuration of a MEMS microphone. The first and the second sensor signal VSIGP, VSIGN is sensed differential by a fully differential input-output amplifier 46. In contrast to a two chip solution or a two amplifier solution the advantage of such a configuration is that the noise sources inside the amplifier 46 are correlated and can be suppressed by the differential nature of the amplifier 46. Moreover, a higher integration level can be achieved by using a single chip solution to interface to both MEMS capacitors 11, 21. This advantage is realized by the examples of the sensor arrangement 10 shown in Figures 1A to 1F.

In an alternative embodiment, the first electrode 14 of the first capacitive sensor 11 is realized as the first backplate that forms a top-plate. The second electrode 15 of the first capacitive sensor 11 is implemented as the first diaphragm that forms a bottom-plate.

In an alternative embodiment, the first electrode 24 of the second capacitive sensor 21 is realized as the second diaphragm that forms a top-plate. The second electrode 25 of the second capacitive sensor 21 is implemented as the second backplate that forms a bottom-plate.

In an alternative embodiment, not shown, the first capacitive sensor 11 is inserted in the circuit shown in Figure 1A in place of the second capacitive sensor 21 and the second capacitive sensor 21 is inserted in place of the first capacitive sensor 11.

Thus, one diaphragm of the first and the second capacitive sensor 11, 21 is a top-plate and the other diaphragm is a bottom-plate. Consequently, one backplate of the first and the second capacitive sensor 11, 21 is a top-plate and the other backplate is a bottom-plate.

Alternatively, the first and the second capacitive sensor 11, 21 may be fabricated as electret microphones or accelerometers.

Figure 1B shows a further example of the sensor arrangement 10 which is a further development of the example shown in Figure 1A. In Figure 1B, the first electrode 14 of the first capacitive sensor 11 is realized as the first backplate which forms a bottom-plate. The second electrode 15 of the first capacitive sensor 11 is formed as the first diaphragm that is realized as a top-plate. The first electrode 24 of the second capacitive sensor 21 is realized as the second diaphragm which forms a bottom-plate. The second electrode 25 of the second capacitive sensor 21 is formed as the second backplate that is realized as a top-plate.

The amplifier arrangement 43 comprises a first and a second amplifier 60, 61. The first amplifier 60 couples the first input 44 of the amplifier arrangement 43 to the first terminal 41 of the differential output 40. Correspondingly, the second amplifier 61 couples the second input 45 of the amplifier arrangement 43 to the second terminal 42 of the differential output 40. Optionally, a current source 62 of the amplifier arrangement 43 is coupled to the first and the second amplifier 60, 61. The first and the second amplifier 60, 61 may have an equal amplification factor, e.g. the amplification factor may be 1 or different from 1. The amplification factor can be named gain factor.

The amplifier arrangement 43 is constructed out of two single-ended amplifiers 60, 61. In such an implementation bias currents of the amplifiers 60, 61 are uncorrelated and would increase the input referred noise of the amplifier arrangement 43. Optionally, the noise of common building blocks can be correlated by an additional connection between the first amplifier 60 and the second amplifier 61 resulting in a reduced input referred noise characteristic of the amplifier arrangement 43.

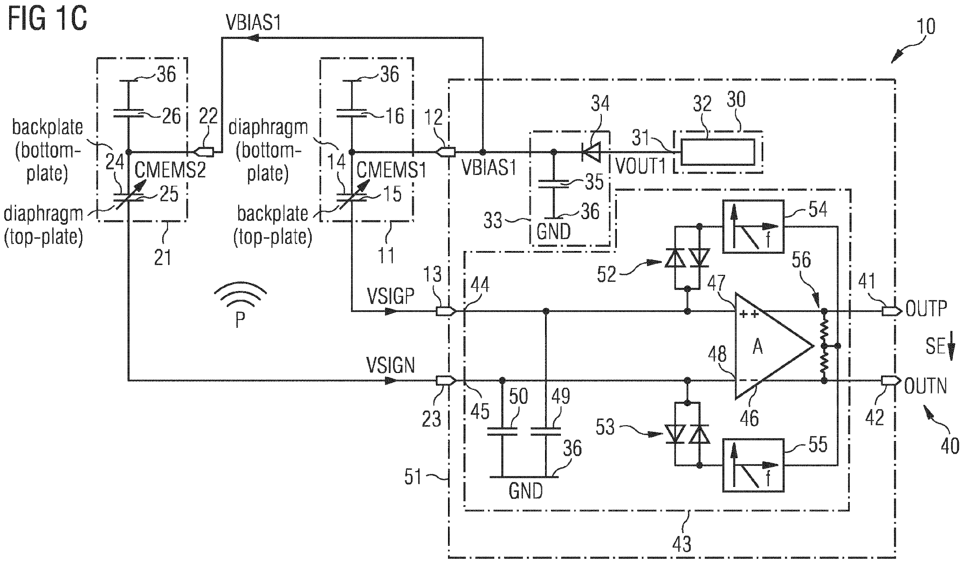

Figure 1C shows a further example of the sensor arrangement 10 which is a further development of the examples shown in Figures 1A and 1B. The amplifier arrangement 43 comprises a first anti-parallel circuit of diodes 52 connected to the first input 44 of the amplifier arrangement 43 and a second anti-parallel circuit of diodes 53 connected to the second input 45 of the amplifier arrangement 43. The anti-parallel circuit of diodes 52, 53 both comprises two diodes: An anode of a first diode is connected to a cathode of a second diode and a cathode of the first diode is connected to an anode of the second diode. The diodes of the anti-parallel circuits of diodes 52, 53 can be discrete components or parasitic diodes due to CMOS switches, well diodes etc.. CMOS is the abbreviation for complementary metal-oxide-semiconductor.

The amplifier arrangement 43 comprises a first feedback block 54 coupling the differential output 40 to the first anti-parallel circuit of diodes 52 and a second feedback block 55 coupling the differential output 40 to the second anti-parallel circuit of diodes 53. The first and the second feedback block 54, 55 have a low-pass characteristic, e.g. resulting in a closed loop high pass characteristic. The first and the second feedback block 54, 55 regulate the DC level of the inputs 47, 48 of the amplifier 46.

The amplifier arrangement 43 comprises a common mode sensing circuit 56 arranged between the first and the second output 41, 42 of the differential output 40. A tap of the common mode sensing circuit 56 is coupled via the first feedback block 54 and the first anti-parallel circuit of diodes 52 to the first input 44 of the amplifier arrangement 43. The tap of the common mode sensing circuit 56 is coupled via the second feedback block 55 and the second anti-parallel circuit of diodes 53 to the second input 45 of the amplifier arrangement 43. The common mode sensing circuit 56 may be realized as a voltage divider. The voltage divider comprises two resistors. The tap of the common mode sensing circuit 56 may be arranged between the two resistors. Alternately, the common mode sensing circuit 56 can be replaced by other circuit blocks to realize the operation of common mode sensing e.g. source follower structures or MOSFETs operated in triode-region.

Advantageously, feedback currents are provided via the feedback blocks 54, 55 and the anti-parallel circuits of diodes 52, 53 to the input side of the amplifier arrangement 43. Thus, the input signals at the differential amplifier 46 are kept in a voltage range appropriate for amplification. Large DC offsets are avoided at the inputs 47, 48 of the differential amplifier 46.

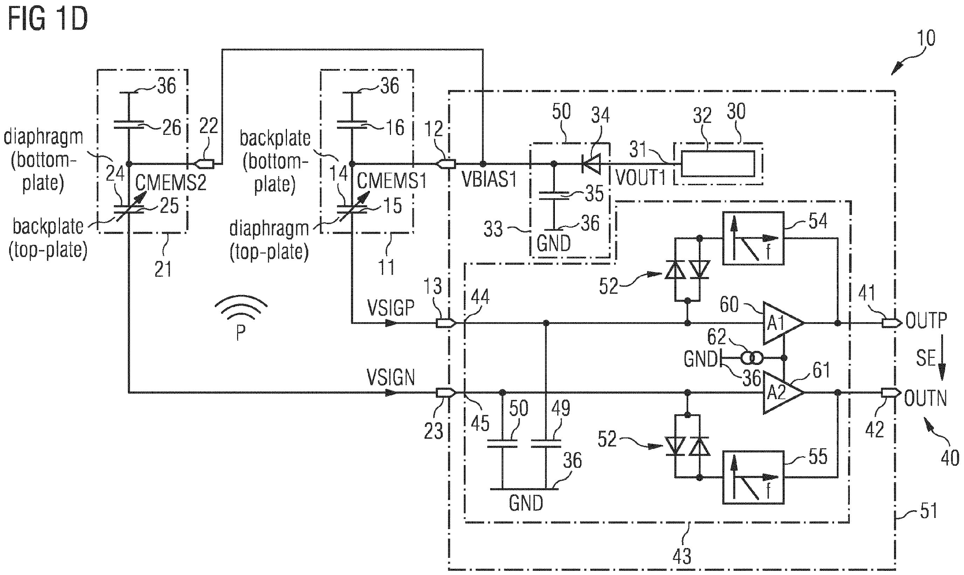

Figure 1D shows a further example of the sensor arrangement 10 which is a further development of the examples shown in Figures 1A to 1C. The first output 41 of the differential output 40 is coupled via the first feedback block 54 and the first anti-parallel circuit of diodes 52 to the first input 44 of the amplifier arrangement 43. The second output 42 of the differential output 40 is coupled via the second feedback block 55 and the second anti-parallel circuit of diodes 53 to the second input 45 of the amplifier arrangement 43.

Advantageously, feedback currents are provided to the first and the second amplifier 60, 61 keeping the input signals of the first and the second amplifier 60, 61 in a controlled voltage range appropriate for amplification.

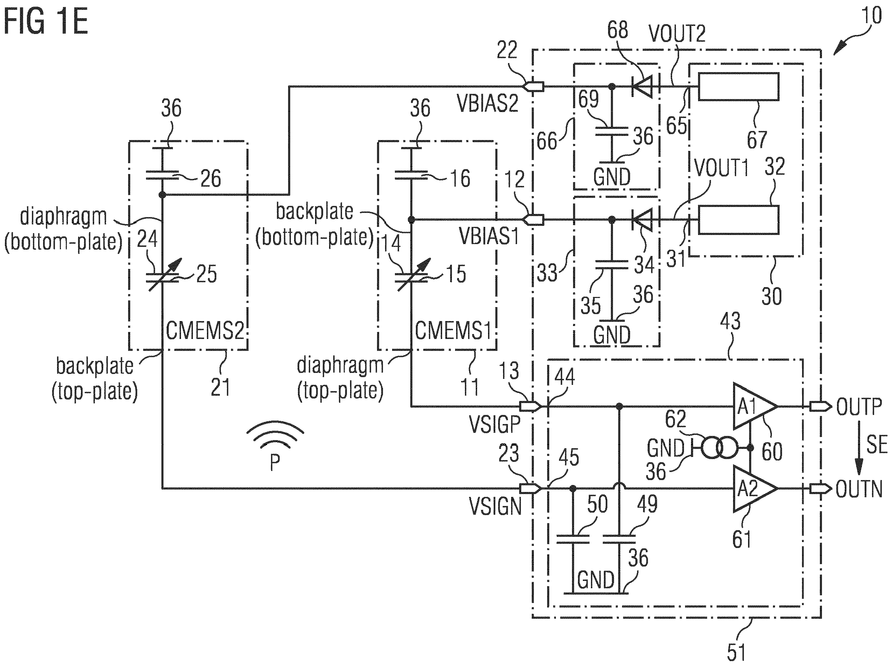

Figure 1E shows a further example of the sensor arrangement 10 which is a further development of the examples shown in Figures 1A to 1D. The amplifier arrangement 43 comprises the first and the second amplifier 60, 61 as shown in Figures 1B and 1D. The charge pump arrangement 30 comprises a second pump output 65. The second pump output 65 is coupled to the first terminal 22 of the second capacitive sensor 21.

Moreover, the sensor arrangement 10 comprises a second circuit block 66 coupled to an output side of the charge pump arrangement 30 and to the first terminal 22 of the second capacitive sensor 21. The second pump output 65 of the charge pump arrangement 30 couples to an input of the second circuit block 66. The second pump output 65 is coupled via the second circuit block 66 to the first terminal 22 of the second capacitive sensor 21. The second circuit block 66 may be realized such as the first circuit block 33. Thus, the second circuit block 66 comprises a second bias diode 68 coupling the second pump output 65 to the first terminal 22 of the second capacitive sensor 21. The second circuit block 66 comprises a second bias capacitor 69 coupling the first terminal 22 of the second capacitive sensor 21 to the reference potential terminal 36. The second bias capacitor 69 is realized such as discussed above regarding the first bias capacitor 35. The second bias circuit 66 generates a second bias voltage VBIAS2.

The charge pump arrangement 30 comprises a second charge pump 67 that is coupled to the second pump output 65. At the second pump output 65, a second pump voltage VOUT2 is generated. The second pump voltage VOUT2 is provided by the second charge pump 67. The second pump voltage VOUT2 may be equal to the first pump voltage VOUT1. Alternatively, the first and the second pump voltage VOUT1, VOUT2 may be different. The first and the second pump voltage VOUT1 and VOUT2 may have the same sign, for example may both be positive with respect to a reference potential GND tapped at the reference potential terminal 36. The first and the second amplifier 60, 61 may be realized as non-inverting amplifiers. The gain factor of the first and the second amplifier 60, 61 may be different from 1.

The charge pump arrangement 30, the first and the second circuit block 33, 66 and the amplifier arrangement 43 are realized as one integrated circuit 51 and thus are fabricated using a single semiconductor body.

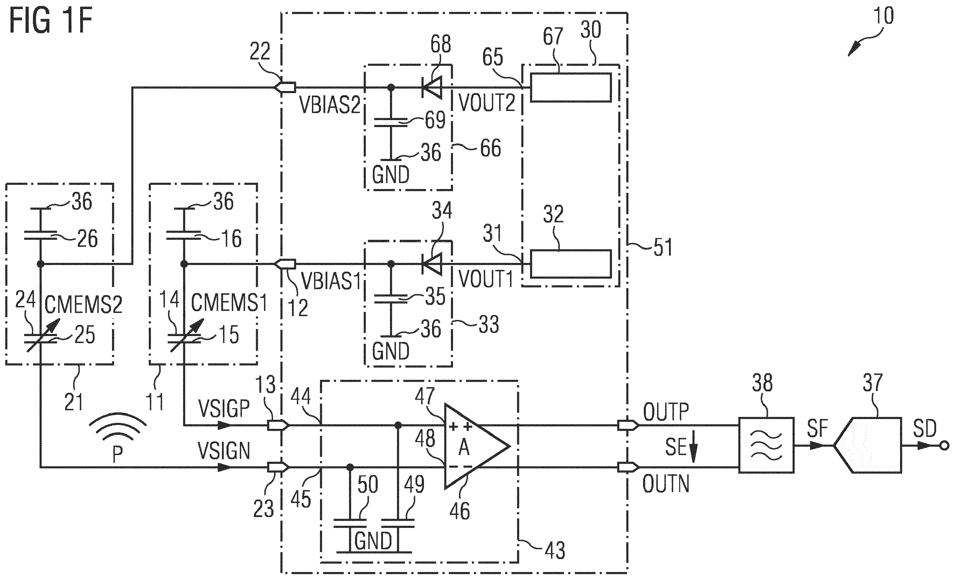

Figure 1F shows a further example of the sensor arrangement 10 that is a further development of the above-shown examples. The amplifier arrangement 43 comprises the differential amplifier 46 as shown in Figures 1A and 1C. The charge pump arrangement 30 comprises the first and the second charge pump 32, 67 as shown in Figure 1E. Moreover, the sensor arrangement 10 comprises the first and the second circuit block 33, 66 as shown in Figure 1E. The first and the second pump voltage VOUT1, VOUT2 may be different. The first and the second pump voltage VOUT1, VOUT2 may have the same sign. The first and the second pump voltage VOUT1, VOUT2 may have the same amount. Alternatively, the first and the second pump voltage VOUT1, VOUT2 may have a different amount. The first and the second capacitive sensor 11, 21 may be realized such as shown in Figures above.

The sensor arrangement 10 comprises a codec 37 that is coupled to the differential output 40. Codec is an abbreviation for encoder/decoder. The codec 37 comprises an analog-to-digital converter connected to the input side of the codec 37. The analog-to-digital converter may be a sigma/delta converter. The codec 37 may comprises a filter coupled to the analog-to-digital converter and an interface coupled to the filter. The examples of the sensor arrangement 10 of Figures 1A to 1E may optionally comprise the codec 37 coupled to the differential output 40.

Additionally, the sensor arrangement 10 may comprise a filter 38 coupling the differential output 40 to the codec 37. The filter 38 is realized as a radio frequency filter. The filter 38 may be a digital filter. The filter 38 may be implemented as a low pass filter or a bandpass filter. The filter 38 comprises two inputs coupled to the first and the second terminal 41, 42 of the differential output 40. The filter 38 may comprise one output connected to the codec 37. Alternatively, the filter 38 may comprise two outputs coupled to two inputs of the codec 37. The examples of the sensor arrangement 10 of Figures 1A to 1E may also optionally comprise the filter 38 connected to the differential output 40.

Alternatively, the filter 38 may be omitted. The codec 37 may e.g. include a digital filter.

The codec 37 and the filter 38 are realized on a separate integrated circuit. Alternatively, the codec 37 and/or the filter 38 may be part of the integrated circuit 51.

The sensor signal SE is provided to the filter 38. The filter 38 generates a filtered sensor signal SF out of the sensor signal SE. The filtered sensor signal SF is digitized by the codec 37 into a digital sensor signal SD that can be tapped at the output side of the codec 75. The sensor arrangement 10 generates the digitized sensor signal SD as a function of the sensor signal SE. The sensor signal SE and the digitized sensor signal SD depend on the acoustic signal P.

The sensor arrangement 10 may include a not-shown circuit performing a differential-to-single ended conversion, e.g. between the differential output 40 and the filter 38, between the filter 38 and the codec 37 or inside the codec 37.

The sensor arrangement 10 uses two independent charge pumps 32, 67 to generate the bias voltages VBIAS1, VBIAS2 of the MEMS capacitors 11, 21 independent of each other. This allows setting different bias voltages for the two different MEMS capacitors 11, 21 to accommodate for performance differences in terms of sensitivity due to the different construction of the MEMS capacitors 11, 21. The different pump voltages VOUT1, VOUT2 can also be generated of one single charge pump, e.g. the first charge pump 32, tapping off from different outputs of the charge pump 32.

The embodiments shown in Figures 1E and 1F are also applicable to a sensor arrangement 10 with two identical MEMS capacitors 11, 21 but with one MEMS capacitor supplied by a positive bias voltage and one being supplied by a negative bias voltage. The first and the second pump voltage VOUT1 and VOUT2 may have different signs. For example, one voltage of the first pump voltage VOUT1 and the second pump voltage VOUT2 may be negative and the other may be positive with respect to the ground potential GND at the reference potential terminal 36.

In a not shown embodiment that is a further development of the embodiments shown in Figures 1E and 1F, the second circuit block 66 couples the first pump output 31 to the first terminal 22 of the second capacitive sensor 21. The second charge pump 67 may be omitted. Thus, the two capacitive sensors 11, 21 are decoupled on the bias side.

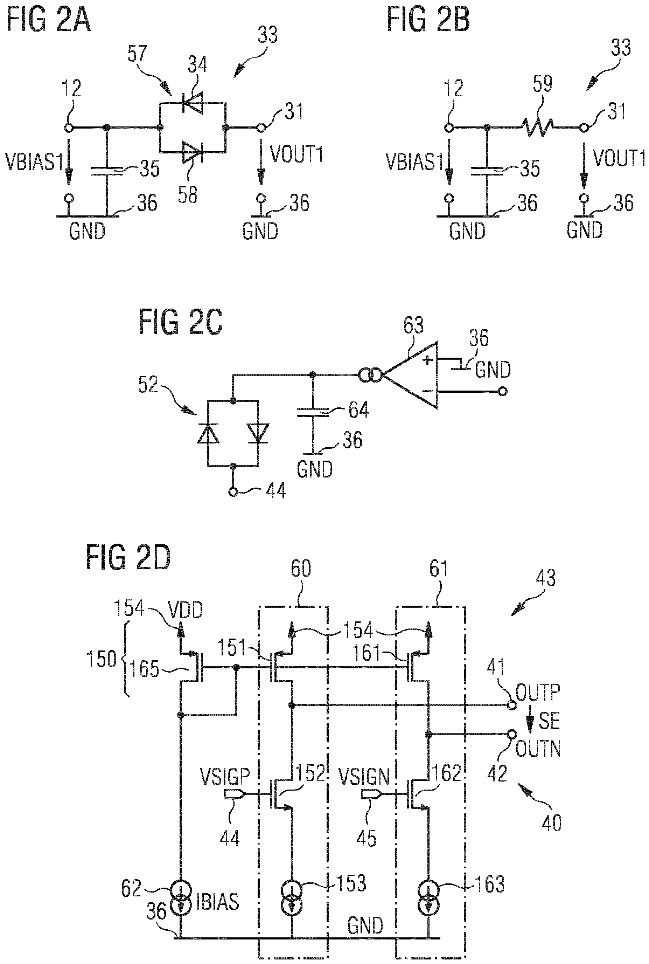

Figure 2A shows an example of the first circuit block 33 that is a further development of the examples shown in Figure 1A to 1F. The first circuit block 33 comprises an anti-parallel circuit of diodes 57 that couples the input of the first circuit block 33 to the output of the first circuit block 33. Thus, the anti-parallel circuit of diodes 57 couples the first pump output 31 to the first terminal 12 of the first capacitive sensor 11. The anti-parallel circuit of diodes 57 comprises the first bias diode 34 and a further bias diode 58. An anode of the further bias diode 58 is connected to a cathode of the first bias diode 34 and a cathode of the further bias diode 58 is connected to an anode of the first bias diode 34.

Advantageously, the anti-parallel circuit of diodes 57 is configured to keep a value of the first bias voltage VBIAS1 nearly constant. Thus, the first bias voltage VBIAS1 can be calculated according to the following equation:

$$\text{VOUT1} - \text{VT} < \text{VBIAS1} < \text{VOUT1} + \text{VT},$$

wherein VOUT1 is a value of the first pump voltage and VT is a forward threshold voltage of the first bias diode 34 and of the further bias diode 58. Advantageously, the anti-parallel circuit of diodes 57 implements a high resistance value between the first pump output 31 and the first terminal 12 of the first capacitive sensor 11. In an alternative embodiment, the first bias capacitor 35 is omitted.

Figure 2B shows a further example of the first circuit block 33 as a further development of examples shown in Figures 1A to 1F and 2A. The first circuit block 33 comprises a resistor 59 coupled to the input of the first circuit block 33 and to the output of the first circuit block 33. Thus, the resistor 59 connects the first pump output 31 to the first terminal 12 of the first capacitive sensor 11. The resistor 59 may obtain a high resistance value that may be higher than 10 mega Ohm, 1 giga Ohm, 1 tera Ohm or 100 tera Ohm.

The second bias circuit 66 may be realized such as shown in Figures 2A and 2B.

Figure 2C shows an example of details of the sensor arrangement 10 shown in Figures 1C and 1D. The first feedback block 54 comprises a feedback amplifier 63. The feedback amplifier 63 may be configured as operational transconductance amplifier, shorted OTA. The first feedback block 54 may comprise a feedback capacitor 64 coupled to an output of the feedback amplifier 63. The differential output 40 may be coupled to an inverting input of the feedback amplifier 63 (in case the first amplifier 60 has a positive amplification factor). The second feedback block 55 may be realized such as shown in Figure 2C.

Figure 2D shows an example of details of the sensor arrangement 10 shown in Figures 1B, 1D and 1E. The amplifier arrangement 43 comprises the first and the second amplifier 60, 61 and the current source 62. A terminal of the current source 62 is coupled to the first and the second amplifier 60, 61. A further terminal of the current source 62 is connected to the reference potential terminal 36. The amplifier arrangement 43 includes a current mirror 150 that couples the terminal of the current source 62 to the first and the second amplifier 60, 61. The first and the second amplifier 60, 61 are operated in a common biasing scheme.

The first amplifier 60 comprises a first current mirror transistor 151, a first input transistor 152 and a first current source 153 that are arranged in a series connection between a supply terminal 154 and the reference potential terminal 36. The first current mirror transistor 151 couples the supply terminal 154 to the first input transistor 152. The first current source 153 couples the first input transistor 152 to the reference potential terminal 36. A control terminal of the first input transistor 152 is connected to the first input 44 of the amplifier arrangement 43. A node between the first current mirror transistor 151 and the first input transistor 152 is coupled to the first terminal 41 of the differential output 40; said node may be directly connected to the first terminal 41 or may be coupled via a not-shown stage of the first amplifier 60 to the first terminal 41.

The second amplifier 61 comprises a second current mirror transistor 161, a second input transistor 162 and a second current source 163 that are arranged in a series connection between the supply terminal 154 and the reference potential terminal 36. The second current mirror transistor 161 couples the supply terminal 154 to the second input transistor 162. The second current source 163 couples the second input transistor 162 to the reference potential terminal 36. A control terminal of the second input transistor 162 is connected to the second input 45 of the amplifier arrangement 43. A node between the second current mirror transistor 161 and the second input transistor 162 is coupled to the second terminal 42 of the differential output 40; said node may be directly connected to the second terminal 42 or may be coupled via a not-shown stage of the second amplifier 61 to the second terminal 42.

The current mirror 150 comprises the first and the second current mirror transistor 151, 161 and a further current mirror transistor 165. The further current mirror transistor 165 couples the supply terminal 154 to the current source 62. A control terminal of the further current mirror transistor 165 is connected to control terminals of the first and the second current mirror transistor 151, 161 and to a node between the further current mirror transistor 165 and the current source 62.

The first and the second sensor signal VSIGP, VSIGN are provided to the control terminals of the first and the second input transistor 152, 162. A supply voltage VDD is tapped at the supply terminal 154. The supply voltage VDD may e.g. be provided to the integrated circuit 51 from an external voltage source. The current source 62 provides a bias current IBIAS that is mirrored to the first and the second amplifier 60, 61. Thus, the first and the second amplifier 60, 61 are coupled to the common current source 62 by the current mirror 150. Advantageously, disturbances such as noise in the two amplifiers 60, 61 only have a small influence on the sensor signal SE due to said coupling.

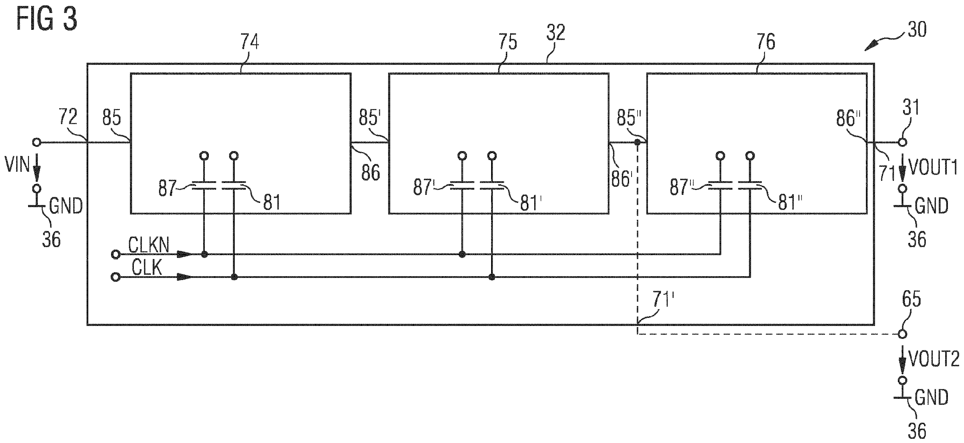

Figure 3 shows an example of the charge pump arrangement 30 that is a further development of the above-shown embodiments. The charge pump arrangement 30 comprises the first charge pump 32. The first charge pump 32 has an output 71 and an input 72. The first charge pump 32 may be implemented as a positive charge pump. The first charge pump 32 generates the first pump voltage VOUT1 at the output 71 of the first charge pump 32. The first pump voltage VOUT1 is positive with respect to the reference potential GND tapped at the reference potential terminal 36. The output 71 of the first charge pump 32 is coupled via a not-shown circuit part (such as e.g. a switch or filter) or directly connected to the first pump output 31 of the charge pump arrangement 30. Thus, the first pump voltage VOUT1 may be provided at the first pump output 31 of the charge pump arrangement 30. In Figure 3, a simplified block diagram of the first charge pump 32 is illustrated.

The first charge pump 32 comprises a first number N of stages 74 to 76. In the example shown in Figure 3A, the first number N is 3. Alternatively, the first number N may be 1, 2, 4 or a higher number. Therefore, the first number N of stages 74 to 76 may be higher than 0, higher than 1, higher than 2, higher than 3 and/or higher than 4. The first number N of stages 74 to 76 may be lower than 10, lower than 5 and/or lower than 3. The first number N of stages 74 to 76 couple the input 72 of the first charge pump 32 to the output 71 of the first charge pump 32. The first number N of stages 74 to 76 are connected in series between the input 72 of the first charge pump 32 and the output 71 of the first charge pump 32.

Each of the first number N of stages 74 to 76 may be realized identically. The first stage 74 comprises a first capacitor 81, a second capacitor 87 and at least two switches or diodes not shown. An input 85 of the first stage 74 is connected to the input 72 of the first charge pump 32. An output 86 of the first stage 74 is coupled via the N-1 stages 75, 76 to the output 71 of the first charge pump 32.

The second stage 75 is implemented such as the first stage 74. The output 86 of the first stage 74 is connected to a further input 85' of the second stage 75. The second stage 75 comprises a further first capacitor 81', a further second capacitor 87', at least two switches or diodes, not shown, and a further output 86'.

Also the third stage 76 is implemented such as the first stage 74. The third stage 76 comprises an additional first capacitor 81", an additional second capacitor 87", at least two switches or diodes, not shown, an additional input 85" and an additional output 86".

An input voltage VIN is provided to the input 72 of the first charge pump 32. The input voltage VIN is realized as a reference voltage. The input voltage VIN may be an internally derived reference voltage. The integrated circuit 51 may comprise a reference voltage generator, not shown, that generates the input voltage VIN. For example, the input voltage VIN may obtain a value of 1.31 V. Alternatively, the input voltage VIN may be supplied to the integrated circuit 51 via the supply terminal 154 and may be equal to the supply voltage VDD. A first clock signal CLK is provided to the first capacitor 81, 81', 81" of the different stages 74 to 76. A second clock signal is provided to the second capacitor 87, 87', 87" of the different stages 74 to 76.

Optionally, as indicated by a dotted connection line, the first pump circuit 32 may comprise a further output 71' coupled or connected to the second pump output 65. One of the outputs of the first number N of outputs 86, 86', 86" of the first charge pump 32 may be coupled or connected via the further output 71' to the second pump output 65, optionally with the exception of the output 86" of the last stage of the first number N of stages 74 to 76. This pump arrangement 30 may be used e.g. in the sensor arrangements 10 of Figures 1E and 1F. Thus, a third number S of stages 74 to 76 of the first charge pump 32 couple the input 72 of the first charge pump 32 via the further output 71' of the first charge pump 32 to the second pump output 65, with S<N or S≤N. The second pump voltage VOUT2 has the same sign as the first pump voltage VOUT1 but may have a smaller amount in comparison to the first pump voltage VOUT1.

Alternatively, the first and the second pump output 31, 65 may be interchanged.

Charge is pumped by the first stage 74 to the output 86 of the first stage 74. A voltage can be tapped at the output 86 of the first stage 74 that is higher than the input voltage VIN. The second stage 75 generates an even higher output voltage at the further output 86' of the second stage 75 using the voltage that is provided at the output 86 of the first stage 74. Thus, the first charge pump 32 generates the first pump voltage VOUT1 with a value being higher than a value of the input voltage VIN. The first pump voltage VOUT1 may be in a range between 5V and 100V, more specific between 10V and 50V.

Figure 4 shows an example of the sensor arrangement 10 which is a further development of the embodiments shown above. A cross section of the first and the second capacitive sensor 11, 21 is shown. The first and the second capacitive sensor 11, 21 are both realized as microphones. The first and the second capacitive sensor 11, 21 may be realized as external capacitive sensors. The first and the second capacitive sensor 11, 21 may be realized on two semiconductor bodies. Alternatively, the first and the second capacitive sensor 11, 21 are fabricated on a single semiconductor body.

The MEMS arrangement 10 is constructed by two separate MEMS capacitive sensors 11, 21 with opposite geometric orientation. The first and the second capacitive sensor 11, 21 are attached to one side of a carrier 140 of the sensor arrangement 10. The integrated circuit 51, not shown, may also be attached to the carrier 140 and is connected to the first and the second capacitive sensor 11, 21. The first and the second capacitive sensor 11, 21 both have a diaphragm and a backplate. The diaphragms move as a function of the acoustic signal P and the backplates have a position independent of the acoustic signal P. A first diaphragm of the first capacitive sensor 11 is between a first backplate of the first capacitive sensor 11 and the carrier 140. The first electrode 14 of the first capacitive sensor 11 may be realized by the first diaphragm and the second electrode 15 of the first capacitive sensor 11 may be realized by the first backplate (or vice versa).

A second backplate of the second capacitive sensor 21 is between a second diaphragm of the second capacitive sensor 21 and the carrier 140. The first electrode 24 of the second capacitive sensor 21 may be realized by the second backplate and the second electrode 25 of the second capacitive sensor 21 may be realized by the second diaphragm (or vice versa). The first and the second capacitive sensor 11, 21 are flipped with respect to the direction of the acoustic signal P.

In such a configuration, the first capacitive sensor 11 generates the first sensor signal VSIGP, whereas the second capacitive sensor 21 generates the second sensor signal VSIGN. The first sensor signal VSIGP and the second sensor signal VSIGN both depend on the same acoustic signal P. The acoustic signal P reaches the first and the second capacitive sensor 11, 21 through openings 141, 141' of the carrier 140. The openings 141, 141' are acoustic port holes. The first sensor signal VSIGP has a positive value and the second sensor signal VSIGN has a negative value at a point of time. At a following point of time, the first sensor signal VSIGP has a negative value and the second sensor signal VSIGN has a positive value. The second sensor signal VSIGN is a negated version of the first sensor signal VSIGP. The values of the first sensor signal VSIGP and the second sensor signal VSIGN have a different sign. On an acoustic stimulus, the displacement of the first diaphragm of the first capacitive sensor 11 is in opposite direction in comparison to the displacement of the second diaphragm of the second capacitive sensor 21. Advantageously, this leads to a positive and negative change in the voltage on the first and the second input 44, 45 of the amplifier arrangement 43.

Alternatively, the first and the second capacitive sensor 11, 21 are attached to the side of the carrier 140 at which the source of the acoustic signal P is located.

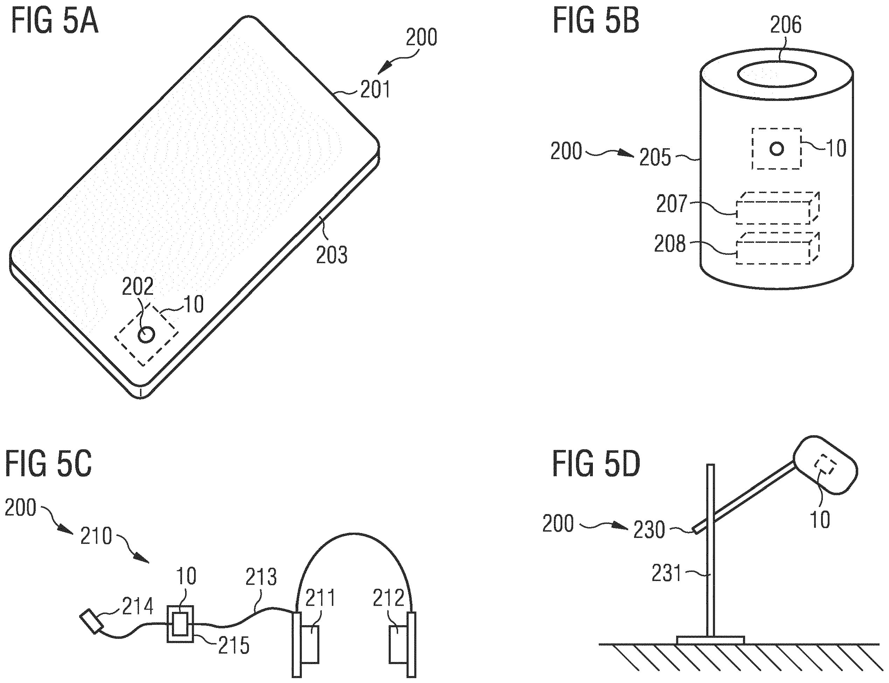

Figure 5A shows an example of an apparatus 200 comprising the sensor arrangement 10 according to one of the embodiments and Figures described above. The apparatus 200 comprises the sensor arrangement 10. In figures 5A to 5D, the sensor arrangement 10 is realized as a microphone arrangement. The apparatus 200 is realized as a mobile device 201. The mobile device 201 may be configured for mobile communication. The mobile device 201 comprises an opening 202 in a casing 203. Thus, sound can be detected by the sensor arrangement 10 through the opening 202.

Figure 5B shows a further example of the apparatus 200 which is a further development of the embodiments shown in the figures above. The apparatus 200 is realized as a smart speaker 205. The smart speaker 205 comprises the sensor arrangement 10. Additionally, the smart speaker 205 comprises a loudspeaker 206. The smart speaker 205 may comprise an energy-storing device 207 such as, for example, a battery.

The smart speaker 205 may comprise a communication device 208 for communication, for example with a wireless local area network, abbreviated as WLAN.

Figure 5C shows a further example of the apparatus 200 which is a further development of the embodiments shown in the figures above. The apparatus 200 is implemented as a headset 210. The headset 210 comprises the sensor arrangement 10 encapsulated in a housing 215 and a loudspeaker 211. Additionally, the headset 210 may comprise a further loudspeaker 212. A cable 213 of the headset 210 couples the loudspeaker 211, the optional further loudspeaker 212 and the sensor arrangement 10 to a plug 214.

Figure 5D shows a further example of the apparatus 200 which is a further development of the embodiments shown in the figures above. The apparatus 200 is realized as a studio device 230. The studio device 230 comprises the sensor arrangement 10 that is realized as a microphone and a holder 231.

The embodiments shown in the Figures 1A to 5D as stated represent example embodiments of the improved sensor arrangement, therefore they do not constitute a complete list of all embodiments according to the improved sensor arrangement. Actual sensor arrangement configurations may vary from the embodiments shown in terms of circuit parts, shape, size and materials, for example.

List of Reference Signs

| | |
|---|---|
| 10 | sensor arrangement |
| 11 | first capacitive sensor |
| 12 | first terminal |
| 13 | second terminal |
| 14 | first electrode |
| 15 | second electrode |
| 16 | first sensor capacitor |
| 21 | second capacitive sensor |
| 22 | first terminal |
| 23 | second terminal |
| 24 | first electrode |
| 25 | second electrode |
| 26 | second sensor capacitor |
| 30 | charge pump arrangement |
| 31 | first pump output |
| 32 | first charge pump |
| 33 | first circuit block |
| 34 | first bias diode |
| 35 | first bias capacitor |
| 36 | reference potential terminal |
| 37 | encoder/decoder |
| 38 | filter |
| 40 | differential output |
| 41, 42 | terminal |
| 43 | amplifier arrangement |
| 44, 45 | input |
| 46 | differential amplifier |
| 47, 48 | input |
| 49, 50 | amplifier capacitor |

| | |
|---|---|
| 51 | integrated circuit |
| 52, 53 | anti-parallel circuit of diodes |
| 54, 55 | feedback block |
| 56 | common mode sensing circuit |
| 57 | anti-parallel circuit of diodes |
| 58 | further bias diode |
| 59 | resistor |
| 60 | first amplifier |
| 61 | second amplifier |
| 62 | current source |
| 63 | feedback amplifier |
| 64 | feedback capacitor |
| 65 | second pump output |
| 66 | second circuit block |
| 67 | second charge pump |
| 68 | second bias diode |
| 69 | second bias capacitor |
| 71, 71' | output |
| 72 | input |
| 74 to 76 | stage |
| 81, 81', 81" | first capacitor |
| 85, 85', 85" | input |
| 86, 86', 86" | output |
| 87, 87', 87" | second capacitor |
| 140 | carrier |
| 141, 141' | opening |
| 150 | current mirror |
| 151, 161, 165 | current mirror transistor |
| 152, 162 | input transistor |
| 153, 163 | current source |
| 154 | supply terminal |
| 200 | apparatus |
| 201 | mobile device |
| 202 | opening |
| 203 | casing |
| 205 | smart speaker |
| 206 | loudspeaker |
| 207 | energy storage device |
| 208 | communication device |
| 210 | headset |
| 211, 212 | loudspeaker |
| 213 | cable |
| 214 | plug |
| 215 | housing |
| 230 | studio device |
| 231 | holder |
| CLK | first clock signal |
| CLKN | second clock signal |
| IBIAS | bias current |
| GND | reference potential |
| OUTN | second output signal |
| OUTP | first output signal |
| P | acoustic signal |
| SD | digitized sensor signal |
| SE | sensor signal |
| SF | filtered sensor signal |
| t | time |
| T | period |

| T1, T2 | duration |
| TO1, TO2 | non-overlap time |
| VBIAS1 | first bias voltage |
| VBIAS2 | second bias voltage |
| VDD | supply voltage |
| VIN | input voltage |
| VOUT1 | first pump voltage |
| VOUT2 | second pump voltage |
| VSIGN | second sensor signal |
| VSIGP | first sensor signal |

**Claims**

1. Sensor arrangement, comprising

   - a first capacitive sensor (11) with a first and a second terminal (12, 13),
   - a second capacitive sensor (21) with a first and a second terminal (22, 23),
   - a charge pump arrangement (30) coupled to the first terminal (12) of the first capacitive sensor (11) and to the first terminal (22) of the second capacitive sensor (21), and
   - a differential output (40) having a first terminal (41) coupled to the second terminal (13) of the first capacitive sensor (11) and having a second terminal (42) coupled to the second terminal (23) of the second capacitive sensor (21),

   wherein the first and the second capacitive sensor (11, 21) have an opposite geometric orientation.

2. Sensor arrangement of claim 1,
   comprising a first circuit block (33),
   wherein the first circuit block (33) comprises at least one out of a group comprising a first bias diode (34), an anti-parallel circuit of diodes (57), a resistor (59) and a first bias capacitor (35), and
   wherein the first circuit block (33) is coupled to an output side of the charge pump arrangement (30) and to the first terminal (12) of the first capacitive sensor (11).

3. Sensor arrangement of claim 2,
   wherein the charge pump arrangement (30), the first circuit block (33) and the amplifier arrangement (43) are realized as one integrated circuit (51).

4. Sensor arrangement of one of claims 1 to 3,
   comprising an encoder-decoder (37) with an input side coupled to the differential output (40).

5. Sensor arrangement of one of claims 1 to 4,
   wherein the charge pump arrangement (30) comprises

   - a first pump output (31) coupled to the first terminal (12) of the first capacitive sensor (11) and
   - a second pump output (65) coupled to the first terminal (22) of the second capacitive sensor (21).

6. Sensor arrangement of claim 5,
   wherein the charge pump arrangement (30) comprises

   - a first charge pump (32) coupled to the first pump output (31) and
   - a second charge pump (67) coupled to the second pump output (65).

7. Sensor arrangement of claim 5,
   wherein the charge pump arrangement (30) comprises a first charge pump (32) with a first number N of stages (74 to 76), wherein the first pump output (31) is coupled to an output (86, 86', 86") of one of the first number N of stages (74 to 76), and
   wherein the second pump output (65) is coupled to the output (86, 86', 86") of another of the first number N of stages (74 to 76).

8. Sensor arrangement of one of claims 1 to 7,
comprising an amplifier arrangement (43) having

- a first input (44) coupled to the second terminal (13) of the first capacitive sensor (11),
- a second input (45) coupled to the second terminal (23) of the second capacitive sensor (21),
- a first output coupled to the first terminal (41) of the differential output (40), and
- a second output coupled to the second terminal (42) of the differential output (40).

9. Sensor arrangement of claim 8,
wherein the amplifier arrangement (43) comprises

- a first amplifier (60) having an input coupled to the first input (44) of the amplifier arrangement (43),
- a second amplifier (61) having an input coupled to the second input (45) of the amplifier arrangement (43), and
- a current source (62) coupled to the first amplifier (60) and the second amplifier (61).

10. Sensor arrangement of claim 8,
wherein the amplifier arrangement (43) comprises a differential amplifier (46) having a first and a second input (47, 48) coupled to the first and the second input (44, 45) of the amplifier arrangement (43).

11. Sensor arrangement of one of claim 1 to 10,
wherein the first and the second capacitive sensor (11, 21) are both implemented as one of a group comprising a microphone and an accelerometer.

12. Sensor arrangement of one of claims 1 to 11,
wherein the first capacitive sensor (11) is implemented as a first microphone having a first backplate and a first diaphragm,
wherein the second capacitive sensor (12) is implemented as a second microphone having a second backplate and a second diaphragm, and
wherein the first and the second capacitive sensor (11, 21) are fabricated such that the first backplate moves towards the first diaphragm, when the second backplate moves away from the second diaphragm.

13. Apparatus,
comprising the sensor arrangement (10) of one of claims 1 to 12, wherein the apparatus (200) is realized as one of a mobile device (201), a smart speaker (205), a headset (210) and a studio device (230).

14. Method for providing a sensor signal, comprising

- providing a first pump voltage (VOUT1) to a first terminal (12) of a first capacitive sensor (11),
- providing a second pump voltage (VOUT2) to a first terminal (22) of a second capacitive sensor (21),
- providing a first output signal (OUTP) at a first terminal (41) of a differential output (40), wherein the first terminal (41) of the differential output (40) is coupled to a second terminal (13) of the first capacitive sensor (11),
- providing a second output signal (OUTN) at a second terminal (42) of the differential output (40), wherein the second terminal (42) of the differential output (40) is coupled to a second terminal (23) of the second capacitive sensor (21), and
- providing the sensor signal (SE) derived from the first output signal (OUTP) and from the second output signal (OUTN),

wherein the first and the second capacitive sensor (11, 21) have an opposite geometric orientation.

15. Method of claim 14,
wherein the first and the second capacitive sensor (11, 21) detect the same parameter and realize an out-of-phase operation.

**FIG 1A**

**FIG 1B**

# FIG 1C

EP 3 694 223 A1

FIG 1D

EP 3 694 223 A1

FIG 1E

FIG 1F

FIG 2A

FIG 2B

FIG 2C

FIG 2D

FIG 3

EP 3 694 223 A1

FIG 4

FIG 5A

FIG 5B

FIG 5C

FIG 5D

Europäisches
Patentamt

European
Patent Office

Office européen
des brevets

# EUROPEAN SEARCH REPORT

Application Number

EP 19 15 5823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/150325 A1 (OLIAEI OMID [US]) 26 May 2016 (2016-05-26) | 1-6,8-15 | INV. H04R3/00 H04R19/04 H04R29/00 |
| Y | * page 3, paragraph 36 - page 6, paragraph 55 * <br> * page 9, paragraph 85 * <br> * figures 1-4,7,9 * <br> * claims 1-5,17-18 * | 7 | |
| X | US 2016/173992 A1 (NICOLLINI GERMANO [IT] ET AL) 16 June 2016 (2016-06-16) | 1-6,8-15 | |
| Y | * page 1, paragraph 2 - page 1, paragraph 3 * <br> * page 4, paragraph 60 - page 4, paragraph 74 * <br> * figures 3-7 * <br> * claim 14 * | 7 | |
| A | EP 2 501 154 A1 (FUNAI ELECTRIC CO [JP]) 19 September 2012 (2012-09-19) * column 10, paragraph 43 - column 10, paragraph 45 * * figures 3B,4 * | 1-15 | |
| Y | WO 2016/206939 A1 (BOSCH GMBH ROBERT [DE]) 29 December 2016 (2016-12-29) * page 7, paragraph 32 * * figure 4 * | 7 | TECHNICAL FIELDS SEARCHED (IPC) <br><br> H04R |

The present search report has been drawn up for all claims

| Place of search | Date of completion of the search | Examiner |
|---|---|---|
| Munich | 7 August 2019 | Meiser, Jürgen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 3 694 223 A1

## ANNEX TO THE EUROPEAN SEARCH REPORT
## ON EUROPEAN PATENT APPLICATION NO.

EP 19 15 5823

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2019

| Patent document cited in search report | Publication date | Patent family member(s) | Publication date |
|---|---|---|---|
| US 2016150325 A1 | 26-05-2016 | NONE | |
| US 2016173992 A1 | 16-06-2016 | CN 105704627 A | 22-06-2016 |
| | | CN 205249478 U | 18-05-2016 |
| | | US 2016173992 A1 | 16-06-2016 |
| EP 2501154 A1 | 19-09-2012 | CN 102742299 A | 17-10-2012 |
| | | EP 2501154 A1 | 19-09-2012 |
| | | EP 3291575 A1 | 07-03-2018 |
| | | JP 5434798 B2 | 05-03-2014 |
| | | JP 2011151767 A | 04-08-2011 |
| | | TW 201143471 A | 01-12-2011 |
| | | US 2012257777 A1 | 11-10-2012 |
| | | WO 2011078216 A1 | 30-06-2011 |
| WO 2016206939 A1 | 29-12-2016 | TW 201713124 A | 01-04-2017 |
| | | US 2016381455 A1 | 29-12-2016 |
| | | US 2017150262 A1 | 25-05-2017 |
| | | WO 2016206939 A1 | 29-12-2016 |

EPO FORM P0459

For more details about this annex : see Official Journal of the European Patent Office, No. 12/82